(19)

Europäisches
Patentamt
European
Patent Office
Office européen
des brevets

(11) **EP 2 312 706 A1**

(12) **EUROPEAN PATENT APPLICATION**
published in accordance with Art. 153(4) EPC

(43) Date of publication:
**20.04.2011 Bulletin 2011/16**

(21) Application number: **09802791.5**

(22) Date of filing: **10.06.2009**

(51) Int Cl.:
*H01S 3/094* (2006.01)    *H01S 3/06* (2006.01)
*H01S 3/115* (2006.01)

(86) International application number:
**PCT/JP2009/060624**

(87) International publication number:
**WO 2010/013546 (04.02.2010 Gazette 2010/05)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **30.07.2008 JP 2008196699**

(71) Applicant: **Hamamatsu Photonics K.K.**
**Hamamatsu-shi**
**Shizuoka 435-8558 (JP)**

(72) Inventors:
• **IKEGAWA Tadashi**
**Osaka 565-0825 (JP)**

• **KAWASHIMA Toshiyuki**
**Hamamatsu-shi**
**Shizuoka 435-8558 (JP)**
• **KAN Hirofumi**
**Hamamatsu-shi**
**Shizuoka 435-8558 (JP)**

(74) Representative: **Frost, Alex John**
**Boult Wade Tennant**
**Verulam Gardens**
**70 Gray's Inn Road**
**London WC1X 8BT (GB)**

(54) **SOLID-STATE LASER DEVICE**

(57) A solid-state laser apparatus 1 bounces laser light L2 between an end mirror 3 and an output mirror 4 via a slab-type solid-state laser medium 2 excited by excitation light L1 to thereby amplify and output the laser light L2. The solid-state laser medium 2 includes incident/exit end faces 2a, 2b on and from which the laser light L2 is made incident and exits, and reflecting end faces 2c, 2d which reflect the laser light L2 so that the incident laser light L2 propagates in a zigzag manner. The incident/exit end face 2a is made incident with the excitation light L1 so that the excitation light L1 propagates along substantially the same propagation path as that of the laser light L2 within the solid-state laser medium 2. Accordingly, a solid-state laser apparatus which can improve the coupling efficiency between the excitation light and the laser light is realized.

**Fig.1**

EP 2 312 706 A1

**Description**

**Technical Field**

The present invention relates to a solid-state laser apparatus which bounces laser light between a pair of reflecting mirrors via a slab-type solid-state laser medium excited by excitation light to thereby amplify and output the laser light.

**Background Art**

As a conventional solid-state laser apparatus in the above technical field, there has been known one that makes excitation light incident onto one incident/exit end face of a pair of incident/exit end faces on and from which laser light is made incident and exits in a solid-state laser medium, along an opposing direction of the pair of incident/exit end faces, and makes excitation light incident onto the other incident/exit end face along a direction oblique to the opposing direction of the pair of incident/exit end faces (refer to, for example, Non Patent Document 1). Such a solid-state laser apparatus allows uniformly exciting the whole solid-state laser medium.

**Citation List**

**Non Patent Literature**

Non Patent Document 1: Keiichi SUEDA and four others, "Development of high-power LD-pumped thin-slab Yb:YAG laser," The Institute of Electronics, Information and Communication Engineers, p. 17-20

**Summary of Invention**

**Technical Problem**

However, when laser light propagates in a zigzag manner within the solid-state laser medium the whole of which has been uniformly excited, since a region where the laser light does not pass despite being excited is generated, there is a problem that the coupling efficiency between the excitation light and laser light is reduced. Such a reduction in coupling efficiency can lead to a rise in temperature of the solid-state laser medium, and may cause degradation in lasing characteristics (an increase in the thermal lens effect and thermal birefringence).

Therefore, the present invention has been made in view of such circumstances, and an object thereof is to provide a solid-state laser apparatus which can improve the coupling efficiency between the excitation light and laser light.

**Solution to Problem**

In order to achieve the above object, the solid-state laser apparatus according to the present invention is a solid-state laser apparatus which bounces laser light between a first reflecting mirror and a second reflecting mirror via a slab-type solid-state laser medium excited by excitation light to thereby amplify and output the laser light, in which the solid-state laser medium includes a first incident/exit end face and a second incident/exit end face on and from which the laser light is made incident and exits, and reflecting end faces which reflect the laser light so that the incident laser light propagates in a zigzag manner, and the first incident/exit end face is made incident with the excitation light so that the excitation light propagates along substantially the same propagation path as that of the laser light within the solid-state laser medium.

In this solid-state laser apparatus, the excitation light is incident onto the first incident/exit end face of the solid-state laser medium, and propagates along substantially the same propagation path as that of the laser light within the solid-state laser medium. Therefore, a region where the laser light does not pass within the solid-state laser medium can be suppressed from being excited by the excitation light, which makes it possible to improve the coupling efficiency between the excitation light and laser light.

**Advantageous Effects of Invention**

According to the present invention, the coupling efficiency between the excitation light and laser light can be improved.

**Brief Description of Drawings**

[Fig. 1] Fig. 1 is a configuration diagram of a first embodiment of a solid-state laser apparatus according to the present invention.

[Fig. 2] Fig. 2 is a side view of a cooling apparatus for cooling a solid-state laser medium of the solid-state laser apparatus shown in Fig. 1.

[Fig. 3] Fig. 3 is a cross-sectional view of a solid-state laser medium and heat sinks of the solid-state laser apparatus shown in Fig. 1.

[Fig. 4] Fig. 4 is a perspective view of a solid-state laser medium of the solid-state laser apparatus shown in Fig. 1.

[Fig. 5] Fig. 5 is a plan view of a solid-state laser medium for explaining the shape of the solid-state laser medium.

[Fig. 6] Fig. 6 is a graph showing a relationship between the input power of excitation light and the output power of laser light.

[Fig. 7] Fig. 7 is a plan view of a solid-state laser medium for explaining a relationship between the beam diameter of excitation light and the beam diameter of laser light in the solid-state laser medium.

[Fig. 8] Fig. 8 is a side view of a solid-state laser medium for explaining a relationship between the beam diameter of excitation light and the beam diameter of laser light in the solid-state laser medium.

[Fig. 9] Fig. 9 is a side view of a solid-state laser medium for explaining another relationship between the beam diameter of excitation light and the beam diameter of laser light in the solid-state laser medium.

[Fig. 10] Fig. 10 is a plan view of a solid-state laser medium for explaining generation of scattered light in the solid-state laser medium.

[Fig. 11] Fig. 11 is a side view of a solid-state laser medium for explaining generation of scattered light in the solid-state laser medium.

[Fig. 12] Fig. 12 is a configuration diagram of a second embodiment of a solid-state laser apparatus according to the present invention.

**Description of Embodiments**

Hereinafter, preferred embodiments of the present invention will be described in detail with reference to the drawings. Also, the same or corresponding parts are denoted with the same reference symbols in the drawings, and overlapping description will be omitted.

[First Embodiment]

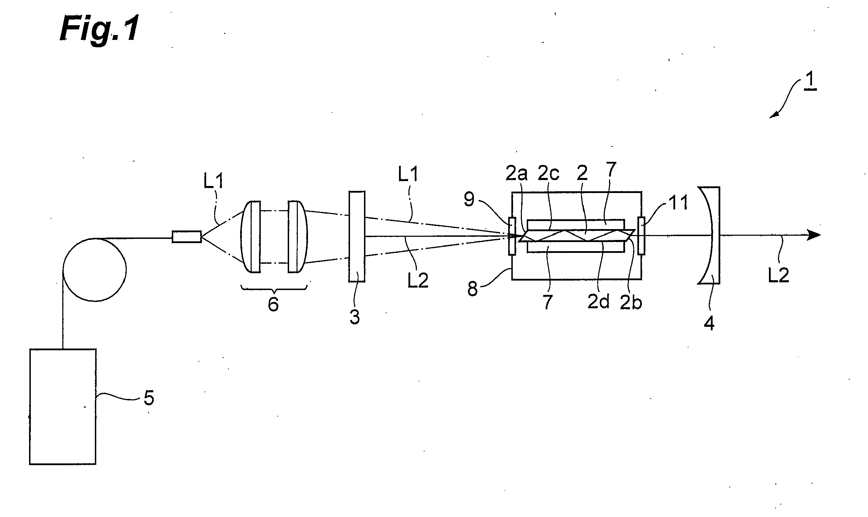

Fig. 1 is a configuration diagram of a first embodiment of a solid-state laser apparatus according to the present invention. As shown in Fig. 1, the solid-state laser apparatus 1 is an apparatus that bounces laser light L2 between an end mirror (first reflecting mirror) 3 and an output mirror (second reflecting mirror) 4 via a slab-type solid-state laser medium 2 excited by excitation light L1 to thereby amplify the laser light L2, and continuously (CW) oscillates the amplified laser light L2 forward from the output mirror 4.

The solid-state laser medium 2 is formed in a rectangular parallelepiped shape, of which both end surfaces opposing in the longitudinal direction are respectively provided as an incident/exit end face (first incident/exit end face) 2a and an incident/exit end face (second incident/exit end face) 2b on and from which the laser light L2 is made incident and exits. The laser light L2 incident on the solid-state laser medium 2 is reflected by reflecting end faces 2c, 2d opposing in a direction orthogonal to the longitudinal direction of the solid-state laser medium 2 to thereby propagate in a zigzag manner within the solid-state laser medium 2.

The end mirror 3 is a dichroic mirror for which a dielectric multilayer film is formed on both principal surfaces of a flat plate. On the principal surface on the side of the solid-state laser medium 2, a dielectric multilayer film having a reflectance of 99.9% for the laser light L2 of a wavelength of 1030nm and having a transmittance of 99.0% for the excitation light L1 of a center wavelength of 940nm, an FWHM of 3nm, and 0 degrees incidence is formed. On the other hand, on the principal surface on the opposite side of the solid-state laser medium 2, a dielectric multilayer film of an anti-reflection (AR) coating having a transmittance of 99.4% for the excitation light L1 is formed.

The output mirror 4 is a plano-concave mirror having a concave surface on the side of the solid-state laser medium 2 and having a plane surface on the opposite side of the solid-state laser medium 2. The concave surface has a radius of curvature of 40m, and on the concave surface, a dielectric multilayer film having a reflectance of 70% for the laser light L2 is formed. On the other hand, on the plane surface, a dielectric multilayer film of an AR coating having a transmittance of 99.5% for the laser light L2 is formed.

The excitation light L1 is supplied from a fiber-coupling type semiconductor laser device 5, and condensed by an optical system 6. The condensed excitation light L1 is transmitted through the end mirror 3, and incident onto the incident/exit end face 2a of the solid-state laser medium 2. At this time, the incident/exit end face 2a is made incident with the excitation light L1 so that the excitation light L1 propagates along substantially the same propagation path as that of the laser light L2 within the solid-state laser medium 2.

The optical system 6 is an aspherical condenser lens system (focal distance of 140mm, 250mm), which condenses the excitation light L1 so that a focal point of the excitation light L1 is located within the solid-state laser medium 2. More specifically, the optical system 6 condenses the excitation light L1 so that the distance between the incident/ exit end face 2a and the focal point of the excitation light L1 becomes substantially equal to the distance between the incident/exit end face 2b and the focal point of the excitation light L1, and so that the excitation light L1 is not incident on end faces of the solid-state laser medium 2 excluding the incident/exit end faces 2a, 2b and the reflecting end faces 2c, 2d.

The solid-state laser medium 2 is disposed in a vacuum chamber 8 with the reflecting end faces 2c, 2d thereof being sandwiched by a pair of heat sinks 7 each formed of copper in a rectangular plate shape. On the vacuum chamber 8, a light transmitting member (first light transmitting member) 9 that transmits the laser light L2 traveling between the incident/exit end face 2a and the end mirror 3 and the excitation light L1 incident on the incident/exit end face 2a is provided. Further, on the vacuum chamber 8, a light transmitting member (second light transmitting member) 11 that transmits the laser light L2 traveling between the incident/exit end face 2b and the output mirror 4 is provided. The light transmitting members 9, 11 are window members for each of which an AR coating having a transmittance of 99.5% for the laser light L2 has been applied to both principal surfaces of a flat plate made of synthetic quartz.

In the solid-state laser apparatus 1 configured as in the above, the solid-state laser medium 2, the end mirror 3, and the output mirror 4 compose a laser resonator. This laser resonator has a resonator length of approximately 600mm, and the solid-state laser medium 2 is placed so that the distance between the incident/exit end face 2a and the end mirror 3 becomes approximately 30mm.

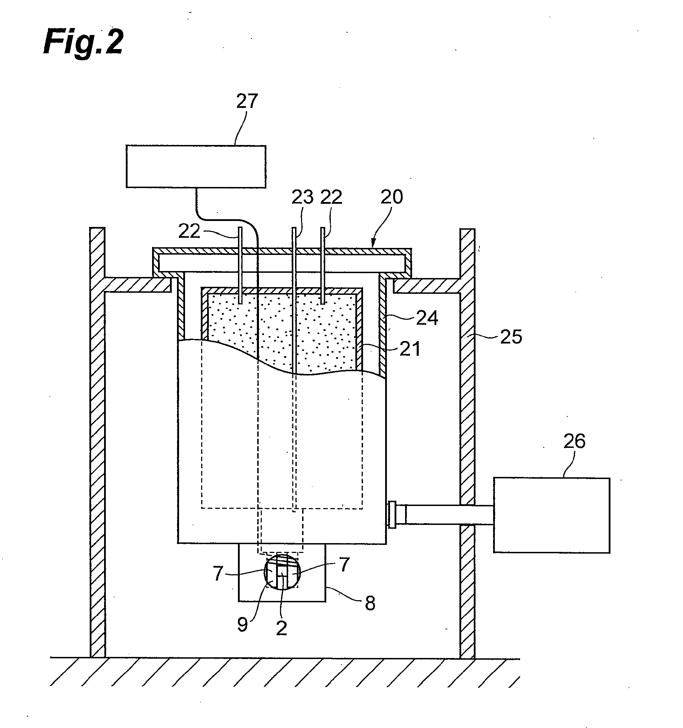

Fig. 2 is a side view of a cooling system for cooling a solid-state laser medium of the solid-state laser apparatus shown in Fig. 1. As shown in Fig. 2, the cooling system 20 includes a liquid nitrogen tank 21, and to a lowermost portion of the liquid nitrogen tank 21, the heat sinks 7 that hold the solid-state laser medium 2 are screwed. In the liquid nitrogen tank 21, a nitrogen lead-in pipe 22 for leading liquid nitrogen into the tank 21 and a nitrogen lead-out pipe 23 for leading vaporized nitrogen out of the inside of the tank 21 are provided. The liquid nitrogen tank 21 is disposed in a vacuum vessel 24 made of stainless steel, and the vacuum vessel 24 is supported by a support member 25. A region between an outer wall surface of the liquid nitrogen tank 21 and an inner wall surface of the vacuum vessel 24 is vacuumed by a vacuum pump 26, whereby the liquid nitrogen tank 21 is vacuum-insulated. Further, the cooling system 20 includes a temperature controller 27 that can control the temperature of the heat sinks 7 from a low temperature to a normal temperature. In addition, a bottom portion of the vacuum vessel 24 serves as the vacuum chamber 8 that stores the solid-state laser medium 2 and the heat sinks 7.

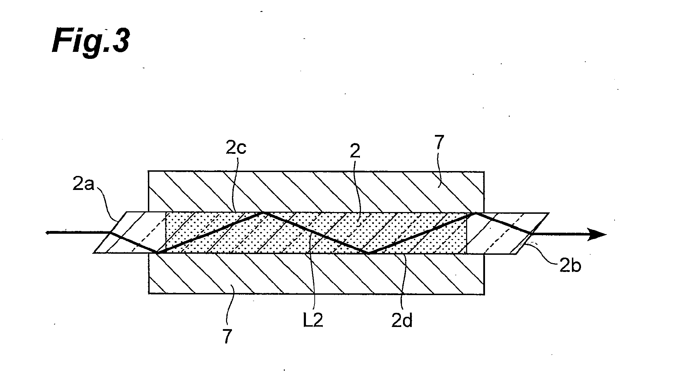

Fig. 3 is a cross-sectional view of a solid-state laser medium and heat sinks of the solid-state laser apparatus shown in Fig. 1. As shown in Fig. 3, the solid-state laser medium 2 is a rectangular parallelepiped-shaped composite ceramics having an overall length in the longitudinal direction of 61.2mm and having a sectional shape orthogonal to the longitudinal direction of a 5mm×5mm square. Both end portions (a part of a length of 10.1mm from each tip in the longitudinal direction) of the solid-state laser medium 2 are YAG doped with no rare-earth ions, and an intermediate portion (a part of a length of 41mm, the dot-hatched part shown in Fig. 3) between both end portions is Yb:YAG doped with Yb ions at 0.7at.%. As a result of thus sandwiching the intermediate portion being Yb:YAG with both end portions being YAG, the end portions of non-doped portions function as heat sinks, and thus the intermediate portion being a doped portion can be suppressed from overheating to improve the beam quality of the laser light L2.

In the solid-state laser medium 2, the incident/exit end face 2a is inclined with respect to a plane orthogonal to the longitudinal direction of the solid-state laser medium 2 so as to create an angle of 50 degrees with the reflecting end face 2d. Moreover, the incident/exit end face 2b is inclined with respect to a plane orthogonal to the longitudinal direction of the solid-state laser medium 2 so as to create an angle of 50 degrees with the reflecting end face 2c. That is, the incident/exit end face 2a and the incident/exit end face 2b are inclined so as to be substantially parallel to each other, and opposed in the longitudinal direction of the solid-state laser medium.

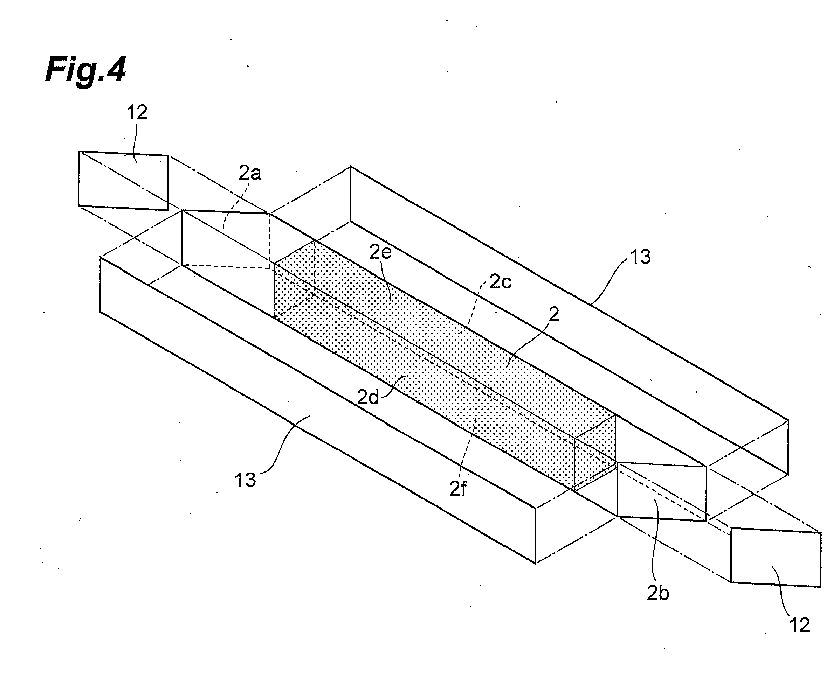

Fig. 4 is a perspective view of a solid-state laser medium of the solid-state laser apparatus shown in Fig. 1. As shown in Fig. 4, the incident/exit end faces 2a, 2b are applied with AR coatings 12 for the excitation light L1 and the laser light L2, and the reflecting end faces 2c, 2d are applied with $SiO_2$ coatings 13 having a thickness of 3 $\mu$m. Accordingly, the reflecting end faces 2c, 2d are to be sandwiched, via the $SiO_2$ coating 13 and an indium layer (not shown) having a thickness of 50$\mu$m, by the pair of heat sinks 7. The $SiO_2$ coating 13 prevents evanescent light (penetration with a depth on the order of a wavelength at reflection) when the excitation light L1 and the laser light L2 are reflected on the reflecting end faces 2c, 2d from being absorbed in the heat sink 7. In addition, end faces 2e, 2f of the solid-state laser medium 2 excluding the incident/exit end faces 2a, 2b and the reflecting end faces 2c, 2d are provided as ground surfaces.

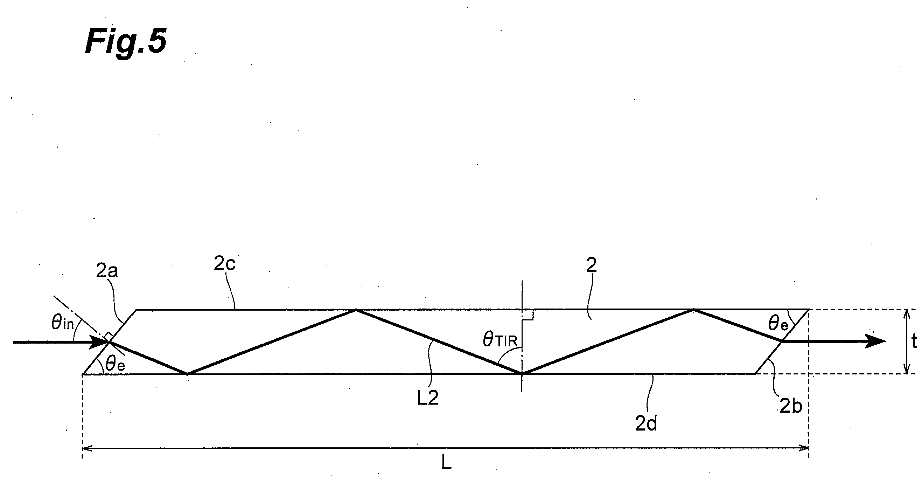

Fig. 5 is a view for explaining the shape of the solid-state laser medium. As shown in Fig. 5, the overall length in the longitudinal direction of the solid-state laser medium 2 is provided as L; the distance between the reflecting end faces 2c and 2d, as t; the angle between the incident/exit end face 2a and the reflecting end face 2d, and the angle between the incident/exit end face 2b and the reflecting end face 2c, as $\theta_e$. Moreover, the incident angle of the laser light L2 with respect to the incident/exit end face 2a is provided as $\theta_{in}$; the angle of total reflection on the reflecting end face 2c, 2d, as $\theta_{TIR}$; the number of times of total reflection within the solid-state laser medium 2, as $n_b$. At this time, when the following relational expressions (1) and (2) are satisfied, the solid-state laser medium 2 can be made to function with an arrangement like an end-pumping rod laser.

$$0.9\,\theta_{in0} \le \theta_{in} \le 1.1\,\theta_{in0} \qquad \cdots \ (1)$$

Here, $\theta_{in0} = 90° - \theta_e$

$$0.9\,L_0 \le L \le 1.1\,L_0 \qquad \cdots \ (2)$$

Here, $L_0 = t\,(\,n_b \cdot \tan\theta_{TIR} + 1/\tan\theta_e)$

Next, operation of the solid-state laser apparatus 1 will be described.

First, as shown in Fig. 2, the region between the outer wall surface of the liquid nitrogen tank 21 and the inner wall surface of the vacuum vessel 24 is vacuumed by the vacuum pump 26, so that the liquid nitrogen tank 21 is vacuum-insulated. Subsequently, liquid nitrogen is led into the tank 21 via the nitrogen lead-in pipe 22, and vaporized nitrogen is led out of the inside of the tank 21 via the nitrogen lead-out pipe 23, while the solid-state laser medium 2 is cooled via the heat sinks 7. At this time, the solid-state laser medium 2 is cooled by the temperature controller 27 to an extremely low temperature such as 77K or less, for example. In addition, since the solid-state laser medium 2 is disposed in the vacuum chamber 8, dew condensation is prevented.

Here, the reason for cooling the solid-state laser medium 2 is as follows. The solid-state laser medium 2 is Yb: YAG and thus normally operates as a three-level laser, but operates as a four-level laser when cooled. Moreover, the stimulated-emission cross section is on the order of 1/10 that of Nd:YAG at a room temperature on the order of 300K, but rises to a value of substantially the same order as that of Nd:YAG when the laser medium is cooled. Further, the laser medium is improved in thermal conductivity by being cooled, and also improved in thermal resistance. Thus, cooling the solid-state laser medium 2 allows operation as a laser with less heat generation and high efficiency.

With the solid-state laser medium 2 having been cooled to an extremely low temperature, as shown in Fig. 1, excitation light L1 having a wavelength of 940nm is output from the semiconductor laser device 5. The excitation light L1 is condensed by the optical system 6, and incident, via the end mirror 3 and the light transmitting member 9, onto the incident/exit end face 2a of the solid-state laser medium 2 disposed in the vacuum chamber 8. The excitation light L1 incident on the incident/exit end face 2a propagates in a zigzag manner within the solid-state laser medium 2 to excite the solid-state laser medium 2. The excitation light L1 is absorbed on the order of 95% as a result of propagating through the intermediate portion being Yb:YAG doped with Yb ions.

Then, in the laser resonator composed of the solid-state laser medium 2, the end mirror 3, and the output mirror 4, laser light L2 having a beam diameter of 2.5mm begins to reciprocate, and the laser light L2 propagates in a zigzag manner within the solid-state laser medium 2 while being optically amplified. At this time, within the solid-state laser medium 2, the propagation path of the excitation light L1 and the propagation path of the laser light L2 are substantially the same.

The optically amplified laser light L2, when having finally reached an excitation light power of 9W, is output forward from the output mirror 4 as continuous (CW) waves. In addition, with the propagation of the excitation light L1, heat load is applied to a part along the propagation path of the solid-state laser medium 2, but since the solid-state laser medium 2 is cooled from the reflecting end faces 2c, 2d via the pair of heat sinks 7, a parabolic temperature distribution having a maximum temperature point at the center of the solid-state laser medium 2 comes to be maintained in a steady state.

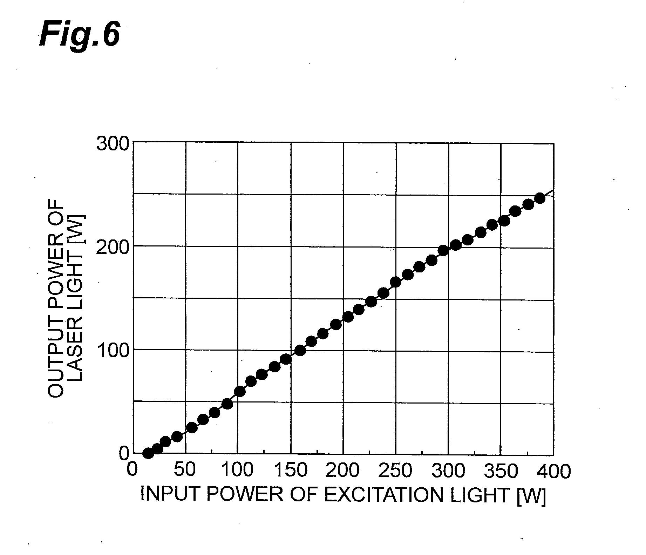

As described above, in the solid-state laser apparatus 1, the excitation light L1 is incident onto the incident/exit end face 2a of the solid-state laser medium 2, and propagates along substantially the same propagation path as that of the laser light L2 within the solid-state laser medium 2. Therefore, a region where the laser light L2 does not pass within the solid-state laser medium 2 can be suppressed from being excited by the excitation light L1, which makes it possible to improve the coupling efficiency between the excitation light L1 and the laser light L2. As a result, as shown in Fig. 6, it becomes possible to realize a high average output laser that has been dramatically improved in laser oscillation efficiency.

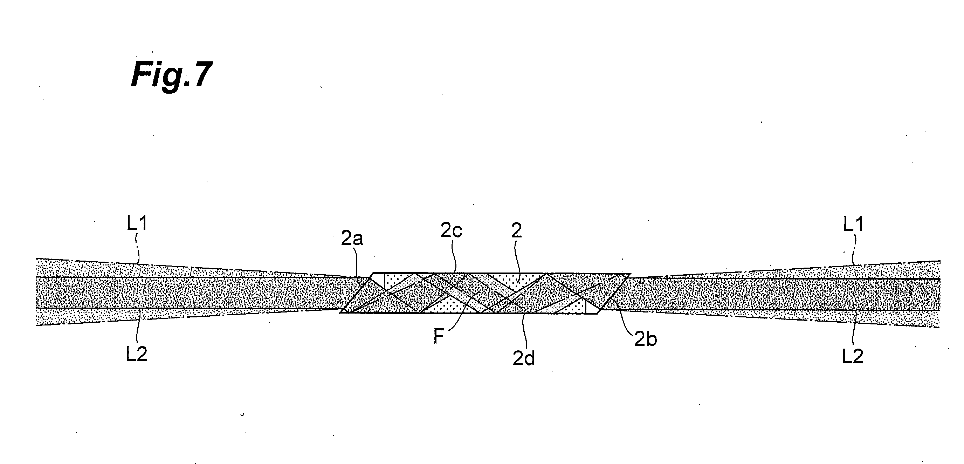

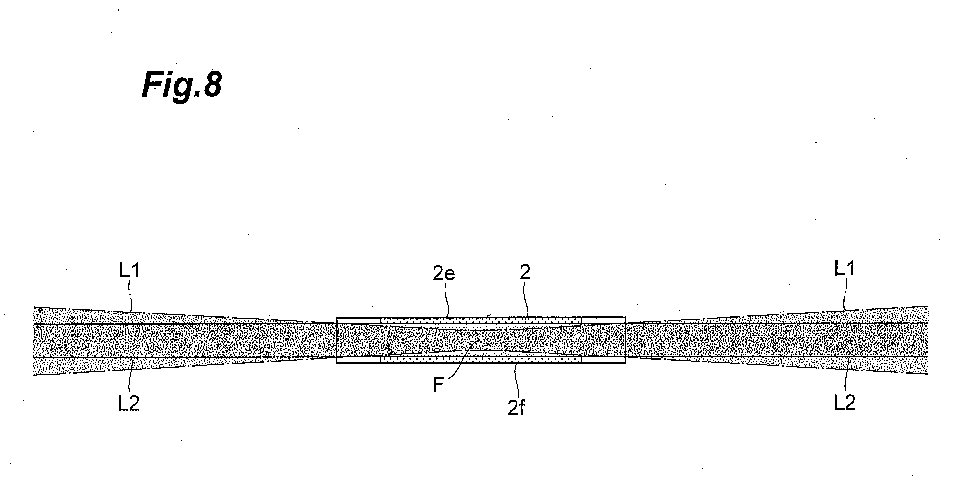

Moreover, in the solid-state laser apparatus 1, the optical system 6, as shown in Figs. 7 and 8, condenses the excitation light L1 so that the distance between the incident/exit end face 2a and a focal point F of the excitation light L1 becomes substantially equal to the distance between the incident/exit end face 2b and the focal point F of the excitation light L1. Accordingly, throughout the entire propagation path within the solid-state laser medium 2, the beam diameter of the excitation light L1 can be made smaller than the beam diameter of the laser light L2, which makes it possible to contribute to an improvement in coupling efficiency between the excitation light L1 and the laser light L2.

In addition, it is not essential to make the beam diameter of the excitation light L1 smaller than the beam diameter of the laser light L2 throughout the entire propagation path within the solid-state laser medium 2. This is because making the beam diameter of the excitation light L1 smaller than the beam diameter of the laser light L2 in at least a part of the propagation path within the solid-state laser medium 2 can contribute to an improvement in coupling efficiency between the excitation light L1 and the laser light L2.

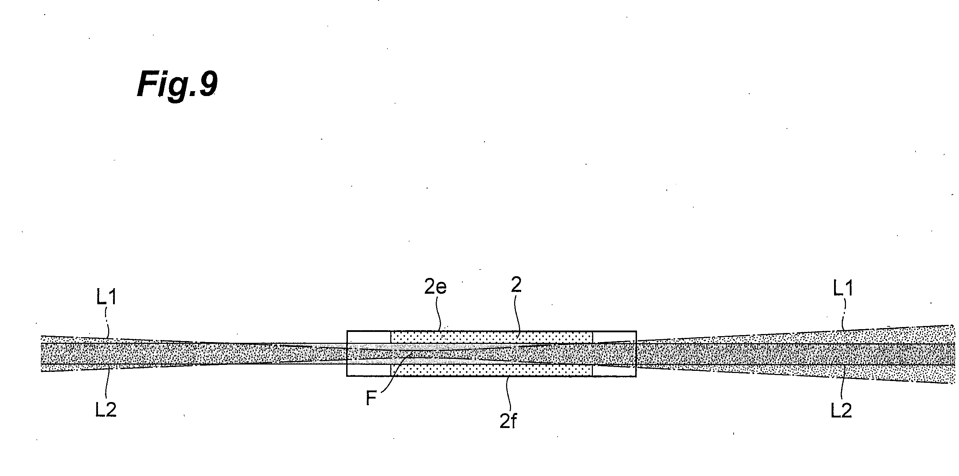

Further, from the point of view that a part of the propagation path within the solid-state laser medium 2 where the beam diameter of the excitation light L1 becomes smaller than the beam diameter of the laser light L2 can be secured long in the front and rear of the focal point F of the excitation light L1, the position of the focal point F as described above is preferred, but as shown in Fig. 9, the optical system 6 may condense the excitation light L1. so that the distance between the incident/exit end face 2a and the focal point F of the excitation light L1 becomes shorter than the distance between the incident/exit end face 2b and the focal point F of the excitation light L1. The position of the focal point F such as this is particularly effective when the doping concentration of rare-earth ions is high in the solid-state laser medium 2, and in such a case, the energy conversion efficiency from the excitation light L1 to the laser light L2 can be improved. This is because, when the doping concentration of rare-earth ions is high in the solid-state laser medium 2, the energy conversion efficiency from the excitation light L1 to the laser light L2 becomes higher as it is closer to an excitation light incident surface (that is, the incident/exit end face 2a side).

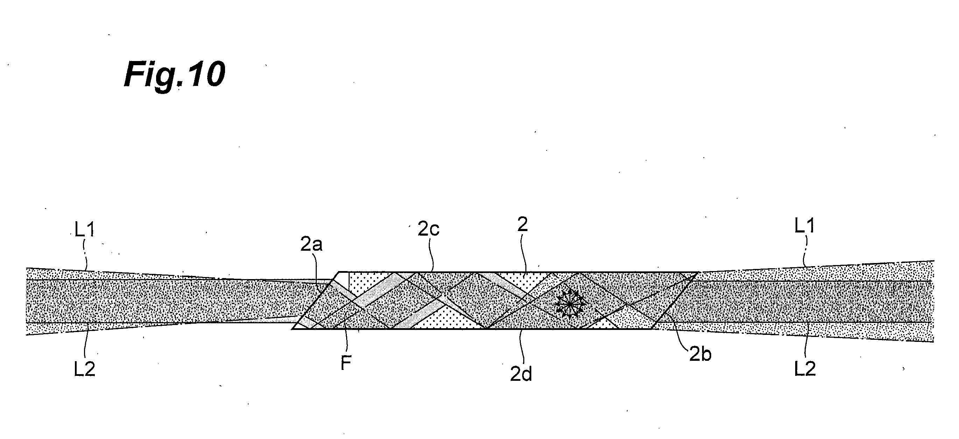

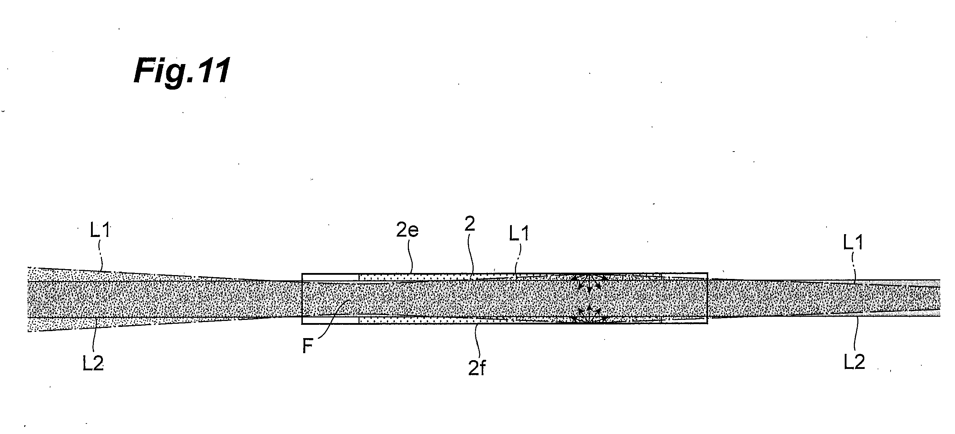

Moreover, in the solid-state laser apparatus 1, the optical system 6 condenses the excitation light L1 so that the excitation light L1 is not incident on the end faces 2e, 2f of the solid-state laser medium 2 excluding the incident/exit end faces 2a, 2b and the reflecting end faces 2c, 2d. That is, within the solid-state laser medium 2, the excitation light L1 has a beam diameter smaller than a sectional outer shape of the solid-state laser medium 2 in a converging part before reaching the focal point F as well as in a diverging part after reaching the focal point F, and the beam diameter is contained within the sectional outer shape. Accordingly, as shown in Figs. 10 and 11, such a situation that the excitation light L1 is scattered as a result of the excitation light L1 being incident onto the end faces 2e, 2f, and the scattered light (the arrows shown in Figs. 10 and 11) excites a region where the laser light L2 does not pass within the solid-state laser medium 2 can be prevented. Such generation of scattered light not only causes a rise in the temperature of the solid-state laser medium 2 but also generates an unnecessary gain region to be a factor for hindering a single-mode oscillation of the laser light L2.

Moreover, in the solid-state laser apparatus 1, since the light transmitting member 9 transmits the excitation light L1 as well as the laser light L2, it becomes unnecessary to provide on the vacuum chamber 8 a light transmitting member that transmits the excitation light L1 separately from the light transmitting member 9 that transmits the laser light L2, so that the apparatus can be simplified and reduced in cost.

[Second Embodiment]

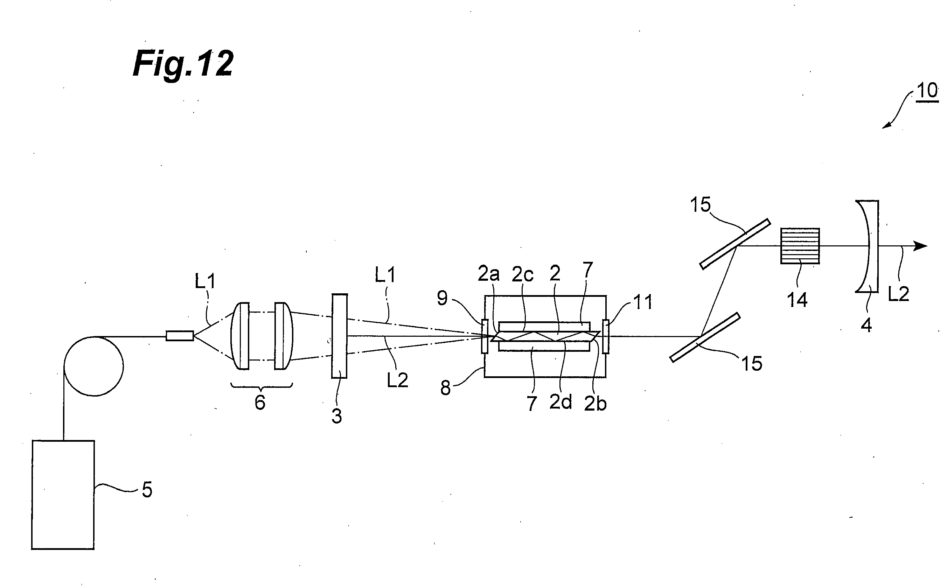

Fig. 12 is a configuration diagram of a second embodiment of a solid-state laser apparatus according to the present invention. As shown in Fig. 12, the solid-state laser apparatus 1 is an apparatus that bounces laser light L2 between an end mirror 3 and an output mirror 4 via a slab-type solid-state laser medium 2 excited by excitation light L1 to thereby amplify the laser light L2, and oscillates the amplified laser light L2 in a pulsed manner forward from the output mirror 4. In the following, description will be given mainly of a difference from the above-described solid-state laser apparatus 1 that continuously (CW) oscillates laser light L2.

As shown in Fig. 12, the solid-state laser apparatus 10 includes a Pockels cell 14 and two polarizing plates 15. The Pockels cell 14, for which an AR coating having a transmittance of 99.5% for the laser light L2 is applied to both end faces of a nonlinear optical crystal (BBO) having a diameter of 6mm, is arranged on a propagation path of the laser light L2 between the vacuum chamber 8 and the output mirror 4. The Pockels cell 14 operates as a phase modulator, and provides a phase difference of $\lambda/4$ between a P polarization component and an S polarization component of the laser light L2 as a result of being applied with a voltage of 4.9kV. The polarizing plates 15, which have characteristics of a transmittance of 98% for the P polarization component of the laser light L2 incident at 55 degrees and a reflectance of 99.9% for the S polarization component thereof, are arranged on the propagation path of the laser light L2 between the vacuum chamber 8 and the Pockels cell 14. By combination with such polarization plates 15, the Pockels cell 14 operates as a Q-switch.

Next, operation of the solid-state laser apparatus 10 will be described.

The Pockels cell 14 applied with a voltage of 4.9kV rotates the polarization direction of light transmitting there-

through by $\lambda/2$ in one reciprocation. Here, since the S polarization component light of the laser light L2 enters the Pockels cell 14 from the side of the solid-state laser medium 2, the P polarization component light returns as a result of reciprocation through the Pockels cell 14. Since this P polarization component light is transmitted through the polarizing plate 15, a resonance mode is not realized so that laser oscillation does not occur. Since the Pockels cell 14 operates at 5kHz, when the voltage applied to the Pockels cell 14 becomes zero once in 200μs, the S polarization component light of the laser light L2 to be transmitted therethrough is transmitted as S polarization without receiving a phase modulation. At this time, since the loss of the laser resonator is drastically reduced, laser oscillation occurs, and pulse wave with a high peak value is output.

Also in the solid-state laser apparatus 10 as above, as in the above-described solid-state laser apparatus 1, the excitation light L1 is incident onto the incident/exit end face 2a of the solid-state laser medium 2, and propagates along substantially the same propagation path as that of the laser light L2 within the solid-state laser medium 2. Therefore, a region where the laser light L2 does not pass within the solid-state laser medium 2 can be suppressed from being excited by the excitation light L1, which makes it possible to improve the coupling efficiency between the excitation light L1 and the laser light L2.

The present invention is not limited to the above-described embodiments.

For example, the solid-state laser medium 2 is not limited to Yb:YAG, and may be another Yb-based laser medium, and may be a Nd-based laser medium such as Nd:YAG. However, using an Yb-based laser medium, which has a heat generation amount on the order of 1/3 of that of a Nd-based laser medium, thus allows an efficient laser oscillation operation. Moreover, being small in heat generation amount leads to various advantages including a reduction in load on the cooling system, downsizing of the apparatus, and an improvement in laser characteristics (a reduction in the thermal lens effect and thermal birefringence).

Here, in the solid-state laser apparatus according to the above embodiment, which is a solid-state laser apparatus which bounces laser light between a first reflecting mirror and a second reflecting mirror via a slab-type solid-state laser medium excited by excitation light to thereby amplify and output the laser light, a configuration is used in which the solid-state laser medium includes a first incident/exit end face and a second incident/exit end face on and from which the laser light is made incident and exits, and reflecting end faces which reflect the laser light so that the incident laser light propagates in a zigzag manner, and the first incident/exit end face is made incident with the excitation light so that the excitation light propagates along substantially the same propagation path as that of the laser light within the solid-state laser medium.

The solid-state laser apparatus according to the above configuration preferably includes an optical system which condenses the excitation light so that a focal point of the excitation light is located within the solid-state laser medium. According to this configuration, the beam diameter of the excitation light can be made smaller than the beam diameter of the laser light in at least a part of the propagation path within the solid-state laser medium, thus it becomes possible to further improve the coupling efficiency between the excitation light and laser light.

At this time, it is preferable that the optical system condenses the excitation light so that the distance between the first incident/exit end face and the focal point of the excitation light becomes substantially equal to the distance between the second incident/exit end face and the focal point of the excitation light. According to this configuration, a part of the propagation path within the solid-state laser medium where the beam diameter of the excitation light becomes smaller than the beam diameter of the laser light can be secured long in the front and rear of the focal point of the excitation light.

Moreover, it is preferable that the optical system condenses the excitation light so that the distance between the first incident/exit end face and the focal point of the excitation light becomes shorter than the distance between the second incident/exit end face and the focal point of the excitation light. According to this configuration, the energy conversion efficiency from the excitation light to the laser light can be improved. This is because, for example, when the doping concentration of rare-earth ions is high in the solid-state laser medium, the energy conversion efficiency from the excitation light to the laser light becomes higher as it is closer to an excitation light incident surface (that is, the first incident/exit end face side).

Further, it is preferable that the optical system condenses the excitation light so that the excitation light is not incident on end faces of the solid-state laser medium excluding the first incident/exit end face, the second incident/exit end face, and the reflecting end faces. According to this configuration, such a situation that the excitation light is scattered as a result of the excitation light being incident onto the end faces of the solid-state laser medium excluding the incident/exit end faces and the reflecting end faces, and the scattered light excites a region where the laser light does not pass within the solid-state laser medium can be prevented.

In the solid-state laser apparatus according to the above configuration, it is preferable that, when an overall length in a direction in which the first incident/exit end face and the second incident/exit end face are opposed is provided in the solid-state laser medium as L; a distance between the reflecting end faces, as t; an angle at an acute angle side between the first incident/exit end face and the reflecting end face, and an angle at an acute angle side between the second incident/exit end face and the reflecting end face, as $\theta_e$; an incident angle of the laser light with respect to the first incident/exit end face, as $\theta_{in}$; an angle of total reflection on the reflecting end face, as $\theta_{TIR}$; a number of times of total reflection within the solid-state laser medium, as $n_b$, the following relational expressions (1) and (2) are satisfied. According to this configuration, the solid-state laser medium can be made to function with an arrangement like an end-pumping rod laser.

$$0.9\,\theta_{in0} \leq \theta_{in} \leq 1.1\,\theta_{in0} \qquad \cdots \ (1)$$

Here, $\theta_{in0} = 90° - \theta_e$

$$0.9\,L_0 \leq L \leq 1.1\,L_0 \qquad \cdots \ (2)$$

Here, $L_0 = t\,(\,n_b \cdot \tan\theta_{TIR} + 1/\tan\theta_e)$

In the solid-state laser apparatus according to the above configuration, it is preferable that the solid-state laser medium is disposed in a vacuum chamber, and on the vacuum chamber, a first light transmitting member which transmits the laser light traveling between the first incident/exit end face and the first reflecting mirror and a second light transmitting member which transmits the laser light traveling between the second incident/exit end face and the second reflecting mirror are provided, and the first light transmitting member transmits the excitation light incident on the first incident/exit end face. According to this configuration, it becomes unnecessary to provide on the vacuum chamber a light transmitting member that transmits the excitation light separately from the light transmitting member that transmits the laser light, thus the apparatus can be simplified and reduced in cost.

**Industrial Applicability**

The present invention can be used as a solid-state laser apparatus which can improve the coupling efficiency between the excitation light and the laser light.

**Reference Signs List**

1, 10 - solid-state laser apparatus, 2 - solid-state laser medium, 2a - incident/exit end face (first incident/exit end face), 2b - incident/exit end face (second incident/exit end face), 2c, 2d - reflecting end face, 3 - end mirror (first reflecting mirror), 4 - output mirror (second reflecting mirror), 6 - optical system, 8 - vacuum chamber, 9 - light transmitting member (first light transmitting member), 11 - light transmitting member (second light transmitting member), L1 - excitation light, L2 - laser light, F - focal point.

**Claims**

1. A solid-state laser apparatus which bounces laser light between a first reflecting mirror and a second reflecting mirror via a slab-type solid-state laser medium excited by excitation light to thereby amplify and output the laser light, wherein
the solid-state laser medium includes a first incident/exit end face and a second incident/exit end face on and from which the laser light is made incident and exits, and reflecting end faces which reflect the laser light so that the incident laser light propagates in a zigzag manner, and
the first incident/exit end face is made incident with the excitation light so that the excitation light propagates along substantially the same propagation path as that of the laser light within the solid-state laser medium.

2. The solid-state laser apparatus according to Claim 1, comprising an optical system which condenses the excitation light so that a focal point of the excitation light is located within the solid-state laser medium.

3. The solid-state laser apparatus according to Claim 2, wherein the optical system condenses the excitation light so that a distance between the first incident/exit end face and the focal point of the excitation light becomes substantially equal to a distance between the second incident/exit end face and the focal point of the excitation light.

4. The solid-state laser apparatus according to Claim 2, wherein the optical system condenses the excitation light so that a distance between the first incident/exit end face and the focal point of the excitation light becomes shorter than a distance between the second incident/exit end face and the focal point of the excitation light.

5. The solid-state laser apparatus according to any one of Claims 2 to 4, wherein the optical system condenses the excitation light so that the excitation light is not incident on end faces of the solid-state laser medium excluding the first incident/exit end face, the second incident/exit end face, and the reflecting end faces.

6. The solid-state laser apparatus according to any one of Claims 1 to 5, wherein when an overall length in a direction in which the first incident/exit end face and the second incident/exit end face are opposed is provided in the solid-state laser medium as L; a distance between the reflecting end faces, as t; an angle at an acute angle side between the first incident/exit end face and the reflecting end face, and an angle at an acute angle side between the second incident/exit end face and the reflecting end face, as $\theta_e$; an incident angle of the laser light with respect to the first incident/exit end face, as $\theta_{in}$; an angle of total reflection on the reflecting end face, as $\theta_{TIR}$; a number of times of total reflection within the solid-state laser medium, as $n_b$, the following relational expressions (1) and (2) are satisfied.

$$0.9\,\theta_{in0} \leq \theta_{in} \leq 1.1\,\theta_{in0} \qquad \cdots \ (1)$$

Here, $\theta_{in0} = 90° - \theta_e$

$$0.9\,L_0 \leq L \leq 1.1\,L_0 \qquad \cdots \ (2)$$

Here, $L_0 = t\,(\,n_b \cdot \tan\theta_{TIR} + 1/\tan\theta_e)$

7. The solid-state laser apparatus according to any one of Claims 1 to 6, wherein the solid-state laser medium is disposed in a vacuum chamber, and
on the vacuum chamber, a first light transmitting member which transmits the laser light traveling between the first incident/exit end face and the first reflecting mirror and a second light transmitting member which transmits the laser light traveling between the second incident/exit end face and the second reflecting mirror are provided, and
the first light transmitting member transmits the excitation light incident on the first incident/exit end face.

**Fig.1**

EP 2 312 706 A1

# Fig.2

*Fig.3*

Fig.4

Fig.5

## Fig.6

EP 2 312 706 A1

## Fig.7

Fig.8

EP 2 312 706 A1

EP 2 312 706 A1

*Fig.9*

# Fig.10

Fig.11

Fig.12

## INTERNATIONAL SEARCH REPORT

| | International application No. |
|---|---|
| | PCT/JP2009/060624 |

A.   CLASSIFICATION OF SUBJECT MATTER
*H01S3/094*(2006.01)i, *H01S3/06*(2006.01)i, *H01S3/115*(2006.01)i

According to International Patent Classification (IPC) or to both national classification and IPC

B.   FIELDS SEARCHED

Minimum documentation searched (classification system followed by classification symbols)
H01S3/094, H01S3/06, H01S3/115

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | JP 9-312430 A  (Sadao NAKAI, Institute for Laser Technology),<br>02 December, 1997 (02.12.97),<br>Par. Nos. [0015] to [0031]; Fig. 1<br>(Family: none) | 1<br>2-7 |
| Y | JP 3-286583 A (Mitsubishi Electric Corp.),<br>17 December, 1991 (17.12.91),<br>Page 1, lower right column, line 1 to page 2, upper left column, line 8; Fig. 8<br>(Family: none) | 2-7 |

| ☒   Further documents are listed in the continuation of Box C. | ☐   See patent family annex. |
|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>06 July, 2009 (06.07.09) | Date of mailing of the international search report<br>21 July, 2009 (21.07.09) |
|---|---|
| Name and mailing address of the ISA/<br>Japanese Patent Office | Authorized officer |
| Facsimile No. | Telephone No. |

Form PCT/ISA/210 (second sheet) (April 2007)

22

**INTERNATIONAL SEARCH REPORT**

| International application No. |
| --- |
| PCT/JP2009/060624 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 164147/1988 (Laid-open No. 84356/1990) (Mitsubishi Electric Corp.), 29 June, 1990 (29.06.90), Page 2, line 10 to page 5, line 18; Fig. 4 (Family: none) | 6,7 |
| Y | JP 2000-89006 A  (Mitsubishi Electric Corp.), 31 March, 2000 (31.03.00), Par. Nos. [0015] to [0023]; Fig. 1 (Family: none) | 7 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Keiichi SUEDA.** Development of high-power LD-pumped thin-slab Yb:YAG laser. *The Institute of Electronics, Information and Communication Engineers,* 17-20